**Europäisches Patentamt**

**European Patent Office**

**Office européen des brevets**

(11) Veröffentlichungsnummer: **0 040 317**
**B1**

# EUROPÄISCHE PATENTSCHRIFT

(45) Veröffentlichungstag der Patentschrift:
**06.11.85**

(21) Anmeldenummer: **81102727.5**

(22) Anmeldetag: **10.04.81**

(51) Int. Cl.⁴: **B 23 Q 7/00,** B 27 M 3/18,
B 23 Q 17/22

(54) Maschinenstruktur mit Führungsvorrichtung für numerisch gesteuerte Werkzeugträger an Bearbeitungsmaschinen für die Möbelherstellung.

(30) Priorität: **16.05.80 DE 3018760**
**12.12.80 DE 3046766**

(43) Veröffentlichungstag der Anmeldung:
**25.11.81 Patentblatt 81/47**

(45) Bekanntmachung des Hinweises auf die Patenterteilung:
**06.11.85 Patentblatt 85/45**

(84) Benannte Vertragsstaaten:
**FR GB IT SE**

(56) Entgegenhaltungen:
**DE - A - 2 106 559**
**DE - C - 949 007**
**US - A - 2 978 943**
**US - A - 3 732 474**
**US - A - 3 734 153**

(73) Patentinhaber: **Held, Kurt, Alte Strasse 1,**
**D-7218 Trossingen 2 (DE)**

(72) Erfinder: **Held, Kurt, Alte Strasse 1,**
**D-7218 Trossingen 2 (DE)**

## Beschreibung

Die Erfindung betrifft eine Maschinenstruktur mit Führungsvorrichtung für gesteuerte obere und untere Werkzeugträger zur Bearbeitung grossflächiger Teile, insbesondere für die Bohr- und Fräsbearbeitung von Möbelteilen zur Verbesserung des Verhältnisses zwischen Bearbeitungs- und Positionierzeit des Werkstücks, bestehend aus Grundelementen, nämlich aus einer Grundplatte mit Rahmenträgern und Führungsträgern, die zum Aufspannen der zu bearbeitenden Werkstücke mit Führungen für Transportketten oder Transportbändern und feststehenden Spannvorrichtungen ausgerüstet sind und wobei die Werkstücktransportgeschwindigkeit im Arbeitsbereich der Maschine auf die in diesem erforderliche und von der Bearbeitung abhängige Verweilzeit abgestimmt ist.

Bei der Bohrbearbeitung von Möbelteilen aus Holz- und Holzwerkstoffen benötigt der Transport der Teile in die Bearbeitungsposition und aus dieser heraus regelmässig einen höheren Anteil an der Stückzahl als die Bearbeitungszeit selbst. Werden numerisch gesteuerte Werkzeugträger zur Fertigung frei programmierbarer Bohrbilder eingesetzt, so stört die Werkstückwechselzeit noch mehr, weil die begrenzte Anzahl von Bearbeitungswerkzeugen und deren Positionierung die Stückzeiten, verglichen mit Vielspindel-Bohrmaschinen, systembedingt verlängert. Bearbeitungszeit ist hier als besonders kostbar.

Aus der DE-A 2 106 559 ist eine Vorrichtung zum Bearbeiten von plattenförmigen Werkstücken im kontinuierlichen Durchlauf, insbesondere zum Erzeugen von Einfräsungen oder Bohrlöchern für Scharnierbänder, Schlösser, Dübellöcher oder dergleichen mit durchlaufenden Transportorganen für die Werkstücke und breitenverstellbarem Bett bekannt, die dadurch gekennzeichnet ist, dass auf gemeinsamen seitlich ausserhalb der Transportorgane angeordneten Führungen verschiebliche Halterungsrahmen angeordnet sind, die unterhalb der Werkstücke liegende Anpressorgane und oberhalb der Werkstücke liegende Ausrichtaggregate, Halterungsaggregate und Bearbeitungsaggregate sowie Auswerfer aufnehmen und zu gleichlaufender Bewegung oder gegensinniger Bewegung mit den Transportorganen mittelbar oder unmittelbar kuppelbar sind. Die bekannte Vorrichtung hat den Nachteil relativ langer Positionierzeiten, da die Halterungsrahmen ausserhalb des Bearbeitungsweges der Maschine liegen, wodurch die gesamte Bearbeitungszeit der Werkstücke verlängert wird.

Der vorliegenden Erfindung liegt die Aufgabe zugrunde, in frei programmierbaren, gesteuerten Bearbeitungsmaschinen eine wesentliche Verbesserung des Verhältnisses zwischen Bearbeitungs- und Positionierzeit, das heisst eine Verbesserung der Produktivität zu ermöglichen.

Die Lösung dieser Aufgabe wird durch die technische Lehre vermittelt, dass die Transportketten oder Transportbänder zur Bearbeitung längerer Werkstücke mit einer oder zwei am oberen Werkzeugträger nach unten gerichteten und mit einer oder zwei am unteren Werkzeugträger nach oben gerichteten und mit den Werkzeugträgern in Längsrichtung beweglichen Spannvorrichtungen ausgerüstet sind und die in Vorschubrichtung vordere oder hintere Kante des Werkstücks zum Beispiel photooptisch erfasst und deren Position der zur Vorschubrichtung parallelen Achse einer Bahnsteuerung des Werkzeugträgers als sich ständig bewegende Bezugskante vorgegeben ist, auf die sich alle Bohrungskoordinaten des programmierten Werkstücks während der Bearbeitung beziehen, wobei der Weg der Spannvorrichtungen durch den Arbeitsbereich der Maschine als Bezugskantenverschiebung bei der Sollwertvorgabe der entsprechenden Maschinenachse berücksichtigt wird.

Die Transportketten oder Transportbänder dienen zum Aufspannen der Werkstücke. Die Werkzeugführungen mit ihren Werkzeugträgern können für die Bearbeitung der Unterseite des Werkstücks mit nach oben wirkenden Werkzeugen ausgerüstet sein, während sie für die Bearbeitung der Oberseite des Werkstücks gleichermassen mit nach unten gerichteten Werkzeugen ausgerüstet sind. Für eine gleichzeitige Bearbeitung der Werkstücke von oben und unten sind die Transportketten mit schmalen Anschlagborden ausgerüstet.

Es wurde weiter gefunden, dass die als Transportketten oder Transportbänder bezeichneten Spannvorrichtungen zur Bearbeitung langer Werkstücke ungeeignet sind, so dass man zweckmässig den oberen Werkzeugträger mit einer oder zwei nach unten gerichteten und mit den Werkzeugträgern in Längsrichtung beweglichen Spannvorrichtungen und die Führungsträger an beiden Enden der Maschinenstruktur mit jeweils einer entsprechenden feststehenden Spannvorrichtung ausstattet.

Die Vorteile einer solchen Maschine liegen in deren höherer Bearbeitungsleistung, ohne dass die Genauigkeit der Bearbeitung leidet. Das Werkstück braucht weder für die Bearbeitung verzögert, stillgesetzt und positioniert, noch braucht es zum Transport beschleunigt zu werden. Die vorschubgeführte Bezugskantenverschiebung ist mit Mitteln der Digitaltechnik zuverlässig und trägheitslos realisierbar. Es können auch mehrere Grundelemente nebeneinander angeordnet werden, um so die Produktionskapazität zu vervielfachen oder den Arbeitsbereich zu vergrössern.

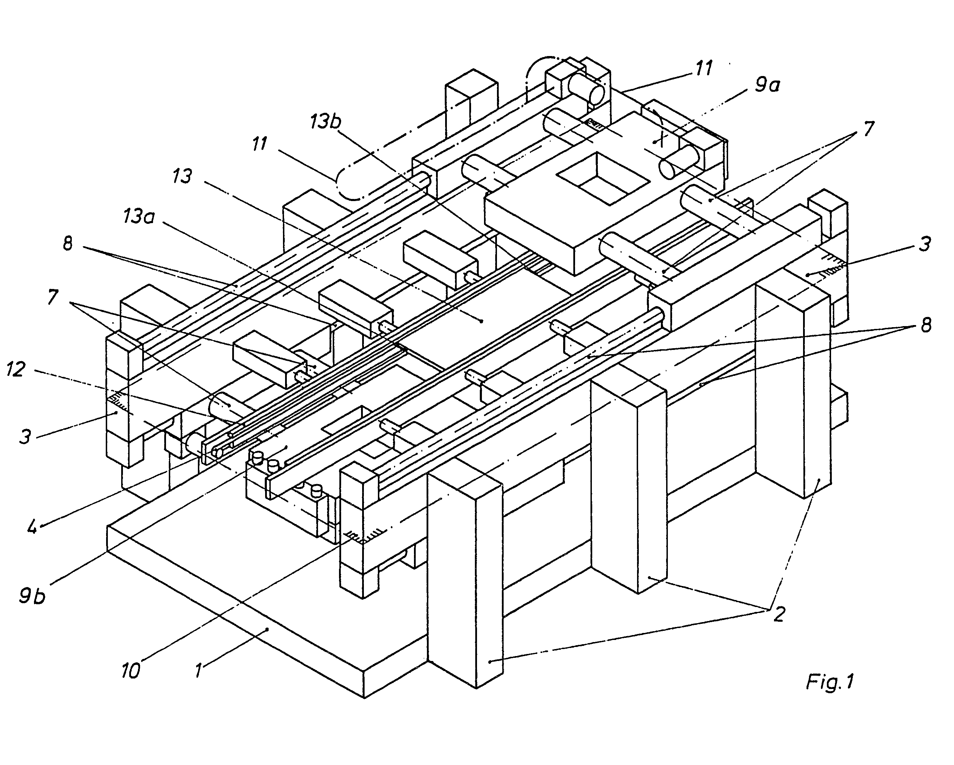

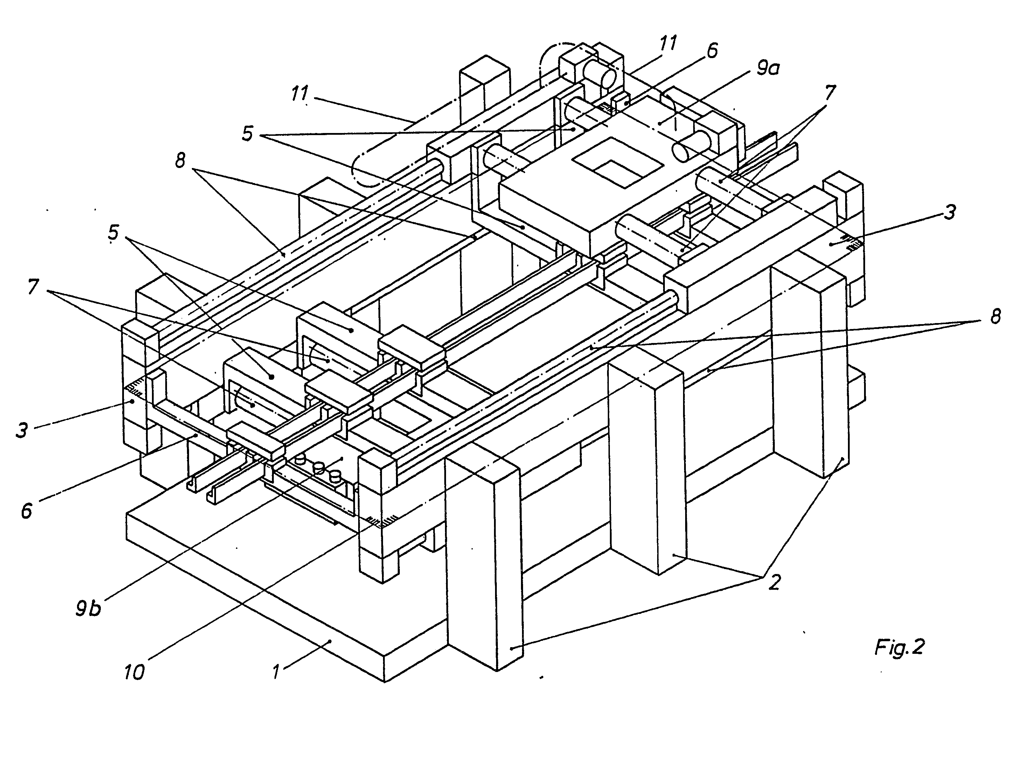

Eine Ausführungsform der Erfindung ist aus der Zeichnung ersichtlich, in der Fig. 1 eine Maschinenstruktur mit Transportbändern zum Aufspannen der Werkstücke zeigt, während Fig. 2 eine Maschinenstruktur zur Bearbeitung langer Werkstücke darstellt.

Gemäss Fig. 1 bestehen die Grundelemente der erfindungsgemässen Maschinenstruktur aus der Grundplatte 1 mit Rahmenträgern 2 und Führungsträgern 3. Innerhalb der Führungsträger 3 sind die Transportketten oder Transportbänder 4 mit dem zu bearbeitenden Werkstück 13 mit seinen Vorder- und Hinterkanten 13a, 13b angeordnet. Darüber bzw. darunter auf den Werkzeugträgerführungen 7, 8 läuft der Werkzeugträger 9a, 9b. Die Anschlagborde 12 an den Führungen der Transportketten 4 dienen für eine gleichzeitige Bearbeitung des Werkstücks 13 von oben und unten. Mit dem Bezugszeichen 10 ist die Spiegelfläche der Führungsvorrichtung bezeichnet, während 11 schematisch die Energiezuführung zeigt.

Gemäss Fig. 2 bestehen die Grundelemente der erfindungsgemässen Maschinenstruktur ebenfalls aus der Grundplatte 1 mit Rahmenträgern 2 und Führungsträgern 3. Auf den Führungsträgern 3 sind oben und unten die Werkzeugträgerführungen 8 für die Längsführung (X-Achse). Die Werkzeugträgerführungen 7 für die Querführung (Y-Achse) sind zwischen den Längsführungen angeordnet und tragen die Werkzeugträger 9a, 9b. Auf den Werkzeugträgern 9a, 9b sind die mit ihnen beweglichen Spannvorrichtungen 5 montiert. An den Führungsträgern 3 an beiden Enden der Maschinenstruktur befinden sich die feststehenden Spannvorrichtungen 6. Mit dem Bezugszeichen 10 ist die Spiegelfläche der Führungsvorrichtung bezeichnet, während 11 schematisch die Energiezuführung zeigt.

Diese Spanneinrichtungen erlauben dann in vorteilhafter Weise die Bearbeitung langer, streifenförmiger Werkstücke in der Weise, dass die festen oder die längsbeweglichen Spannvorrichtungen 6, 5 das Werkstück festhalten in der gewünschten Position zu den für die jeweilige Bearbeitung einzusetzenden Werkzeugen oder, bei geöffneter fester Spanneinrichtung 6, es durch diese hindurch weitertransportieren zur ausgangsseitigen Spanneinrichtung oder in die bewegliche Spanneinrichtung 5 des oberen Werkzeugträgers.

Werden die Spannvorrichtungen 5, 6 so gesteuert, dass während Bearbeitung in X-Richtung mindestens eine feste Spanneinrichtung das Werkstück in Relation zur Maschinenstruktur und damit zum Massbezugspunkt der elektronischen Messeinrichtung festhält und vor dem Weitertransport des Werkstücks die bewegliche Spanneinrichtung 5 spannt, ehe die festen Spannrichtungen 6 öffnen, so wird das Werkstück immer in einer der Steuerung bekannten Lage zum Massbezugspunkt gehalten.

Dadurch wird es möglich, das Werkstück in Z- und Y-Richtung auch während des Transports, zum Beispiel durch den unteren Werkzeugträger, dessen Spannvorrichtung es festhalten, durch Werkzeuge dieses Werkzeugträgers bearbeiten zu lassen. Es kann vom oberen Werkzeugträger übernommen und in gleicher Weise weitertransportiert und bearbeitet werden oder es kann von einer oder beiden festen Spanneinrichtungen festgehalten und von einem oder beiden Werkzeugträgern aus bei dort geöffneten Spannrichtungen wahlweise in X-, Y- oder Z-Richtung bearbeitet werden.

Sollen endlose streifenförmige Werkstücke, die sich, taktweise oder von Fremdantrieben kontinuierlich angetrieben, durch den Arbeitsbereich der Maschine bewegen, bearbeitet werden, so können die Werkzeugträger durch Betätigung der beweglichen Spanneinrichtungen in den Bearbeitungspositionen mit dem bewegten Werkstück synchronisiert werden, solange Bearbeitungen in Z- und Y-Richtung stattfinden, oder der Streifen wird wechselnd nach Bedarf von der Spanneinrichtung des einen Werkzeugträgers gespannt und gestützt und seine Fortbewegung in X-Richtung wird gemessen, während der andere in X-, Y- oder Z-Richtung bearbeitet.

Durch den modulartigen Charakter der Grundelemente 1, 2, 3, 7, 8, 9a und 9b können diese für Maschinen mit in weiten Grenzen veränderlichen Abmessungen, sowie für eine Anordnung mit zwei oder mehr Werkzeugträgern Verwendung finden. Hervorzuheben ist auch noch die Möglichkeit zweier Bearbeitungsebenen für verschiedene Werkzeugträger.

## Patentansprüche

1. Maschinenstruktur mit Führungsvorrichtung für gesteuerte obere und untere Werkzeugträger (9a, 9b) zur Bearbeitung grossflächiger Teile, insbesondere für die Bohr- und Fräsbearbeitung von Möbelteilen zur Verbesserung des Verhältnisses zwischen Bearbeitungs- und Positionierzeit des Werkstücks, bestehend aus Grundelementen, nämlich aus einer Grundplatte (1) mit Rahmenträgern (2) und Führungsträgern (3), die zum Aufspannen der zu bearbeitenden Werkstücke mit Führungen für Transportketten oder Transportbänder (4) und feststehenden Spannvorrichtungen (6) ausgerüstet sind und wobei die Werkstücktransportgeschwindigkeit im Arbeitsbereich der Maschine auf die in diesem erforderliche und von der Bearbeitung abhängige Verweilzeit abgestimmt ist, dadurch gekennzeichnet, dass die Transportketten oder Transportbänder (4) zur Bearbeitung längerer Werkstücke mit einer oder zwei am oberen Werkzeugträger (9a) nach unten gerichteten und mit einer oder zwei am unteren Werkzeugträger (9b) nach oben gerichteten und mit den Werkzeugträgern in Längsrichtung beweglichen Spannvorrichtungen (5) ausgerüstet sind und die in Vorschubrichtung vordere oder hintere Kante (13a, 13b) des Werkstücks (13) zum Beispiel photooptisch erfasst und deren Position der zur Vorschubrichtung parallelen Achse einer Bahnsteuerung des Werkzeugträgers (9a, 9b) als sich ständig bewegende Bezugskante vorgegeben ist, auf die sich alle Bohrungskoordinaten des programmierten Werkstücks (13) während der Bearbeitung beziehen, wobei der Weg der Spannvorrichtungen (4, 5) durch den Arbeitsbereich der Maschine als Bezugskantenverschiebung bei der Sollwertvorgabe der entsprechenden Maschinenachse berücksichtigt wird.

2. Maschinenstruktur nach Anspruch 1, dadurch gekennzeichnet, dass die Werkzeugträger (9a, 9b) auf Werkzeugträgerführungen (7, 8) in Quer- und Längsrichtung geführt sind.

3. Maschinenstruktur nach Anspruch 1 und 2, dadurch gekennzeichnet, dass die Führungen der Transportketten (4) für eine gleichzeitige Bearbeitung der Werkstücke (13) von oben und von unten zusätzlich mit schmalen Anschlagborden (12) ausgestattet sind.

## Claims

1. Machine structure with guide equipment for controlled upper and lower tool carriers (9a, 9b) for the treatment of parts of large area, particularly for the drilling and milling treatment of furniture parts for improvement of the ratio between treatment time and positioning time of the workpiece, the machine structure consisting of base elements, namely of a base plate (1) with frame carriers (2) and guide carriers (3), which for the clamping of the workpieces to be treated are equipped with guides for transport chains or transport belts (4) and stationary clamping devices (6) and wherein the workpiece transport speed in the operating range of the machine is matched to the dwell time which is required in this and dependent on the treatment, characterised thereby, that the transport chains or transport belts (4) are for the treatment of longer workpieces equipped with one or two clamping devices (5), which are directed downwardly at the upper tool carrier (9a) and movable therewith in longitudinal direction, and with one or two clamping devices (5), which are directed upwardly at the lower tool carrier (9b) and movable therewith in longitudinal direction, and the – in direction of advance – front and rear edges (13a, 13b) of the workpiece (13) are detected, for example photo-optically, and their positions are given to the axis, which is parallel to the direction of advance, of a path control of the tool carrier (9a, 9b) as constantly moving reference edge, to which all drilling co-ordinates of the programmed workpiece (13) relate during the treatment, wherein the travel of the clamping devices (4, 5) through the operating range of the machine is taken into consideration as reference edge displacement in the case of the target value input of the corresponding machine axis.

2. Machine structure according to claim 1, characterised thereby, that the tool carriers (9a, 9b) are guided in transverse and longitudinal direction on tool carrier guides (7, 8).

3. Machine structure according to claim 1 and 2, characterised thereby, that the guides of the transport chains (4) are additionally equipped with narrow abutment beads (12) for a simultaneous treatment of the workpieces (13) from above and from below.

## Revendications

1. Structure de machine avec un dispositif de transport pour les porte-outils supérieur et inférieur (9a, 9b) pour l'usinage de pièces de grande surface notamment pour des travaux de perçage et de fraisage de parties de meuble, pour améliorer la relation entre le temps d'usinage et le temps de positionnement de la pièce, composée d'éléments de base à savoir d'une plaque de base (1) avec des montants de châssis (2) et des longerons de guidage (3) équipés de moyens de guidage pour les chaînes de transport ou les bandes de transport (4) et de dispositifs de serrage (6) fixes pour serrer les pièces à usiner, et la vitesse de transport de la pièce dans la zone de travail de la machine étant déterminée en fonction du temps de séjour dans cette zone de la machine dépendant de l'usinage qui est effectué, structure caractérisée en ce que les chaînes de transport ou bandes de transport (4) pour l'usinage de pièces de grande longueur sont équipées d'un ou deux porte-outils supérieurs (9a) dirigés vers le bas et d'un ou deux porte-outils inférieurs (9b) dirigés vers le haut ainsi que de dispositifs de serrage (5) mobiles dans la direction longitudinale avec les porte-outils, et l'arrête avant ou arrière (13a, 13b) vue dans le sens d'avancement de la pièce (13) est par exemple détectée par un moyen photo-optique et sa position est transmise à l'installation de commande de trajectoire des porte-outils (9a, 9b) d'axe parallèle à la direction d'avancement, comme arrête de référence se déplaçant en permanence, et à laquelle se rapportent toutes les coordonnées de perçages de la pièce (13) programmée pendant l'usinage, la trajectoire des dispositifs de serrage (4, 5) étant prise en compte dans la zone de travail de la machine sous la forme du déplacement de l'arrête de référence pour la valeur de consigne de l'axe correspondant de la machine.

2. Structure de machine selon la revendication 1, caractérisée en ce que les porte-outils (9a, 9b) sont guidés dans la direction transversale et la direction longitudinale sur les longerons de guidage (7, 8) de la pièce.

3. Structure de machine selon les revendications 1 et 2, caractérisée en ce que les moyens de guidage des chaînes de transport (4) sont équipés, en plus, d'étroites butées (12) pour l'usinage simultané de la pièce (13) par le haut et par le bas.

Fig.1

Fig.2